# EUROPEAN PATENT SPECIFICATION

(11) **EP 1 946 250 B1**
(45) Date of publication and mention of the grant of the patent: **14.07.2010**
(21) Application number: 06794899.2
(22) Date of filing: 25.10.2006
(51) Int. Cl.: G06K 19/04, G06K 19/077

(54) **A METHOD OF ATTACHING AN RFID TAG TO A COMPONENT, A COMPONENT COMPRISING AN RFID TAG AND AN RFID TAG**
VERFAHREN ZUM ANBRINGEN EINES RFID-ETIKETTS AN EINER KOMPONENTE UND KOMPONENTE MIT EINEM RFID-ETIKETT UND RFID-ETIKETT
PROCEDE DE FIXATION D'ETIQUETTE RFID A UN COMPOSANT, COMPOSANT COMPRENANT UNE ETIQUETTE RFID ET ETIQUETTE RFID

(30) Priority: 25.10.2005 GB 0521702
(43) Date of publication of application: 23.07.2008
(73) Proprietor: Bryant, Keith Charles, Wybunbury Nantwich CW5 7NL (GB)
(72) Inventor: Bryant, Keith Charles, Wybunbury Nantwich CW5 7NL (GB)
(74) Representative: Reeve, Anna Elizabeth
(86) International application number: PCT/GB2006/003974
(87) International publication number: WO 2007/049039

(56) References cited:
- EP-A2- 1 366 998
- US-A1- 2002 190 845

## Description

### Field of the Invention

The present invention relates to a method of attaching an RFID tag to a component, a component comprising an RFID tag for identification and an RFID tag.

### Background of the Invention

Modern manufacturing and supply chains are highly complex and competitive entities that rely on the ability to identify and track materials, work in progress and finished goods. To reduce manpower costs and to reduce errors, systems for automatic identification have been developed and implemented over many years. The most widely used conventional auto identification technology uses barcodes containing identification information which may be printed on packaging materials or on labels that are attached to items of interest. This technology is very successful and may be economically applied to large volumes of low value items, hence its ubiquity in consumer goods and supermarkets.

Barcode technology does, however, have many limitations including, for example, the following. As barcodes are typically read by a laser scanner or other imaging methods, the barcode and therefore the item to which it is attached must be presented to the barcode reader in direct line-of-sight, correctly oriented and within a defined distance range. Barcodes have a limited data content and a one dimensional barcode would typically include no more than a few tens of characters or numbers. Barcodes may be rendered unreadable by dirt or damage. Furthermore, barcodes may be easily reproduced and hence cannot provide any form of authentication. Also, the most acceptable and widely used technology for printing barcodes is direct thermal printing and scanner readability is considered best with direct thermal printing, but this technology is extremely sensitive to environmental conditions such as heat and light (particularly fluorescent light and/or direct sunlight) and is not well suited to environments that results in exposure to such conditions, or even abrasion. Thermal paper remains active after printing and should therefore ideally be coated with a top seal to resist UV light exposure, chemicals and abrasion. This is a time consuming process and adds to the expense of producing the labels.

Auto identification (Auto ID) is a term used to describe the technology and process of automatic data collection and identification occurring in real-time. An alternative auto ID technology that overcomes the limitations of, barcoding and provides additional valuable capabilities is radio frequency identification (RFID). Radio frequency identification (RFID) is a mature technology with proven application in a number of industries, including the automotive industry and forestry. Radio frequency identification is a form of labeling where electronic labels (tags) are programmed with unique information and attached to objects that need to be identified or tracked. The key attributes of the technology are the ability to carry readable data in tags (also known as transponders), which may be attached to items requiring identification, tracking or locating, that is, auto identification. Some RFID systems are read-only, while others permit transceivers (or transponders) to add new information or change existing information on the tag itself. Thus, unlike various other forms of auto identification technology, RFID enables data to be stored, updated and added in an individual transponder or any associated database and enables the completion of various desired outcomes such as printing a label. This ability, combined with increased durability and non-contact, non line-of-sight operation means the tag can be read within, for example, a carton or shipper, or both, and makes RFID much more versatile and powerful for auto identification than, for example, barcodes and also permits greater placement flexibility than, for example, barcode labels (particularly because of the line-of-sight requirement to read a barcode). RFID tags also tend to be extremely accurate with error rates being the lowest of all auto-ID systems and they require virtually no maintenance. A conventional RFID tag has a read accuracy approaching one hundred percent although it is possible to get a no read situation.

As RFID has no line-of-sight requirements and cannot be erased by magnetic fields and other common environmental conditions, the technology can permit the printing of labels using a wider choice of printer. Furthermore, dirt, paint and other opaque substances do not generally affect the tag readability. Thus, non-metallic objects can come between the reader and the tags without response interference which makes RFID tags the ideal "label" of choice in an environment where "blinding" (a lack of knowledge of identity) is paramount, such as in clinical trials.

As the technology has developed, RFID tags have become more advanced and they have moved from being used in highly expensive, specialised applications to mainstream high-volume use in particular industry sectors. In particular, unit costs have reduced making the application of RFID to the tracking of inventory at the unit level a viable option for high value consumer goods.

There are many types of RFID systems but a typical RFID system consists of four main components:
- tags (also known as transponders)
- an antenna
- a reader
- a host computer

These components are described briefly below:
A tag is an electronic device consisting of a microchip to which is attached an antenna. These components are generally packaged to enable them to be attached to the items of interest. The size of a tag is largely dependent on the antenna size, the microchip itself conventionally being very small. A fully functional microchip may be as small as a grain of rice although a small internal antenna size would limit the range over which the data could be read or written.

Tags may include a battery power source but small low-cost tags do not typically include a battery, instead deriving their power from the electromagnetic field generated by the external reader/antenna. The microchip may be in the form of an integrated circuit (typically only a few square millimetres in area) which contains the electronic heart of the tag. This includes its power on/reset circuitry, command de-code (which interprets how a tag is to respond to information received from a reader), and a memory. Each tag may store a unique and unalterable identification code, and it may also store additional, variable information. Tags are generally packaged in suitable materials by encapsulation, or may be attached to a suitable substrate or required medium for attachment.

An antenna is used to generate the radio frequency field through which the tag and reader communicate. For tags without internal power supplies (passive tags) this field is also the source of power for the tag. The shape and size of the antenna influences the reading/writing capability of the system. A small antenna having, for example, a ten or twenty millimetre diameter would require the tag to be carefully positioned quite close to the reader. By contrast, a larger and more complex antenna would communicate with the tag passing through a large space such as a doorway.

A reader is an electronic unit that transfers information to and from one or more tags via the antenna. Although the term suggests no capability to write to RFID tags, the term is often used loosely to describe a transceiver which can both read from and write to such a tag, thus the term 'reader' is generally used to mean a read-only unit and/or a read/write unit. The reader performs the low level communication with the tags and typically provides an interface to the host computer to enable the host computer to receive simple alphanumeric data from the tags in response to a command, without requiring specific knowledge of the tag's internal construction. The reader typically includes an antenna and associated drive and control components used to communicate with RFID tags. The host computer provides the interface between the RFID system and the business systems which are to make use of the tag data. The host computer may take many forms including, for example, a conventional PC, an embedded computer, possibly integrated with the reader to provide a network enabled reader, or a handheld device (such as an industrial device or a PDA which may be stand alone or networked).

The fact that RFID tags may be read without contact and without line-of-sight is particularly advantageous. Furthermore, RFID tags may be read through packaging and through other items, and many items may be read at once, for example, a carton of tagged items may be verified without opening the carton. Also; RFID tags may be much smaller than conventional barcode labels, and may hold more information than one-dimensional barcodes. Conventional RFID tags typically include a unique identity code (in the form of a serial number) which cannot generally be changed or reproduced and may therefore act as a powerful anti-counterfeiting device. Furthermore, RFID tagged data may be readily updated throughout a product lifecycle.

Whilst RFID tagging has a number of advantages, difficulties may typically arise in affixing the RFID tags to the products to be tracked and/or identified. The attachment of the RFID tag to the item of interest can be a complex and expensive process with implications for the user's manufacturing and handling processes. Most early implementations of RFID tagging have used "smart" labels which are typically paper labels incorporating an RFID chip and antenna inlaid in a flexible substrate. However, these labels may be fragile and may suffer an unacceptable number of failures either during the initial application process or in subsequent handling. Furthermore, smart labels are not generally suitable for irregularly shaped items, small bottles or containers of small radius.

Thus there is a need for products, systems and techniques which enable the application of RFID tagging in a form which is robust and may withstand adverse environmental conditions such as high temperatures, abrasion, and submersion, as well as being applicable to containers of various shapes and sizes.

United States Patent Application US2002/0190845 is directed to an RFID material tracking method and apparatus and discloses a method of attaching an RFID tag to a component, the RFID tag having a housing encapsulating control electronics and an antenna.

### Summary of the invention

According to the present invention, there is provided a method of attaching an RFID tag to a component, the RFID tag having a housing encapsulating control electronics and an antenna, the method comprising the steps of:
locating the RFID tag on or in a section of a component;
characterised by:-
applying an ultrasonic welding process to melt a portion of the housing, wherein one or other of the housing of the RFID tag and the component comprises a protrusion extending therefrom, a portion of the component contacting the housing and the protrusion to increase the strength of the weld after cooling; and
allowing the component and the RFID tag to cool to form a weld therebetween.

Preferably, one or other of the housing of the RFID tag and the component comprises a protrusion extending therefrom, and the step of applying an ultrasonic welding process further comprises melting the protrusion to increase the strength of the weld after cooling.

In a preferred embodiment, the step of locating the RFID tag comprises locating the RFID tag in a recess in the component.

The protrusion may extend from a surface of the housing of the RFID tag and the step of locating the RFID tag may further comprise locating the RFID tag so that the protrusion extends into the recess.

Preferably, the protrusion comprises a continuous annular section extending from a face of the housing of the RFID tag and the protrusion may have a substantially equilaterally triangular cross-section.

Preferably, the step of applying an ultrasonic welding process further comprises melting a portion of the component which defines a wall of the recess and/or a portion of a peripheral edge of the housing abutting a wall of the recess to increase the strength of the weld after cooling.

In a preferred embodiment, the component is formed from a plastics material, such as polyethylene and preferably high or medium density polyethylene.

Preferably, the housing of the RFID tag is formed of the same material as the section of the component to which it is to be attached.

In a preferred embodiment, the step of applying an ultrasonic welding process comprises applying one or more of a weld time of around 0.223 milliseconds, an energy of around 30 watts per second, a weld pressure of around 2 bar and a down pressure of around 0.3 bar.

Further, the recess in the component may have a first section and a second section, the first and second sections being substantially co-axial and frustro-conical, tapering outwardly from the section of the component defining the base of the recess. Preferably, the base of the recess has a diameter of around 30 mm, the combined depth of the first and second sections of the recess is around 3mm, and the diameter of the second section at a peripheral free edge spaced from an the edge attaching the first and second sections is around 44mm.

The above method may preferably be used to attach an RFID tag to a component such as a container for storing products, for example pharmaceutical products.

One or more embodiments thereby provide a method of attaching an RFID tag to a component that results in a tamper evident, robust and secure product for use in Auto-ID applications, such as for containers for use within the pharmaceutical industry, which has considerable operational and cost benefits. Each component may be produced with an integral Radio Frequency Identity tag (RFID tag) that carries a unique identifier code. Each component may, thereby, be individually identified by remote reader capabilities, requiring no line-of-sight. The component may be identified throughout the process chain in which it is being used and information may be updated by writing directly to the tag and/or to a separate database. This may establish, inter alia, and in the case of the component being a container, that it has been filled with a specific product on a specific line at a specific time, moved on to a subsequent process or been even to a specific patient. A correct printed label may then be printed as and when required at any point of the packaging process and an update of both the database and the tag itself may be possible, if desired. The tagged component may allow confirmation and complete quality assurance at the completion of a process and, in the case of the component being a container, verification of the correct product being in the correct container, the correct container being at the correct process station, confirmation of the correct end user and the correct printed label being applied by correlation to the unique identification code and "stored" information.

Also, the nature of the component and/or RFID tag may be selected to satisfy user and design specifications in terms of, for example, read distance, location at process stations, readability and functionality.

Thus, one or more embodiments of the present invention provide a component which has an RFID tag attached thereto which may be delivered to the customer already RFID enabled and does not require any special handling processes or additional operations. The RFID microchip and antenna are encased within a housing of the tag and are embedded in a double rigid package instead of on a flexible substrate thereby reducing the likelihood of suffering mechanical damage. Furthermore, one or more embodiments provide a component which has improved protection against damage due to harsh environmental conditions and/or sterilisation environments, as well as having anti-counterfeit and tamper proof attributes. Each component may have a unique serial number which may be difficult to change or replicate and therefore enables confirmation of origin.

### Brief Description Of The Drawings

The present invention will now be described by way of example and with reference to the accompanying drawings in which:
Figure 1 is a perspective view of a conventional RF tag and adhesive label for attaching the tag to a conventional container;
Figure 2a is a diagrammatic representation of the base portion of a standard container;
Figure 2b is a section through the container of Figure 2a along the plane A-A;
Figure 3a is a diagrammatic representation of the base portion of a container according to a preferred embodiment of the present invention;
Figure 3b is a is a section through the container of Figure 3a along the plane B-B
Figure 4 is a cross-sectional view of the portion of the container of Figure 3a;
Figure 5a is a plan view of an RFID tag for incorporation into a container according to a preferred embodiment of the present invention;
Figure 5b is a sectional view through the tag of Figure 5a along A-A;
Figure 5c is a sectional view through the tag of Figure 5b along B-B;
Figure 6 is an elevation of an ultrasonic welder for use in attaching an RFID tag to a container in accordance with a preferred embodiment.
Figure 7a is a diagrammatic representation showing in part section a recess in the base of a container for receiving an RFID tag according to a preferred embodiment of the present invention;
Figure 7b is a diagrammatic representation showing in part section an RFID tag attached to a container according to a preferred embodiment of the present invention; and
Figure 7c is a section through an RFID tag for attachment to the container of Figure 7a according to a preferred embodiment of the present invention.

### Detailed description of preferred embodiments

There is a real desire and need in industry for packaging to be manufactured with an integral RFID functionality, namely, an RFID enabled packaging component in which RFID tags are not applied like a label or attached by adhesive but are integrate into the packaging component itself to provide a practical and robust product.

Whilst there exist many different industries and many suitable products that would benefit from the application of RFID, the present invention will be described by way of examples in the context of containers for use in the packaging of pharmaceuticals. However, it will be appreciated that the methodology embodying the invention is not to be considered as being limited to the packaging of pharmaceuticals but may be applied to any container or product, preferably formed of a plastics material, that requires RFID enablement.

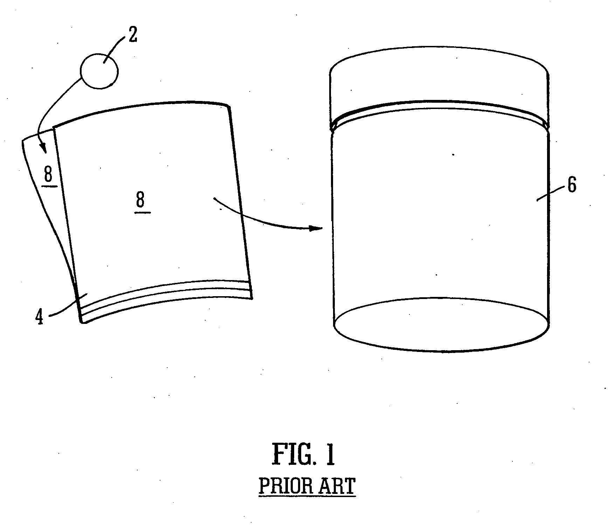

Figure 1 shows a conventional RFID tag 2 to be incorporated in a conventional adhesive label 4 which may be attached to a typical container 6 for pharmaceuticals. Conventionally, the RFID tag 2 is retained between a number of layers 8 of the adhesive label 4 and the label 4 retaining the tag 2 is then applied to an outer surface of the container 6 using an adhesive.

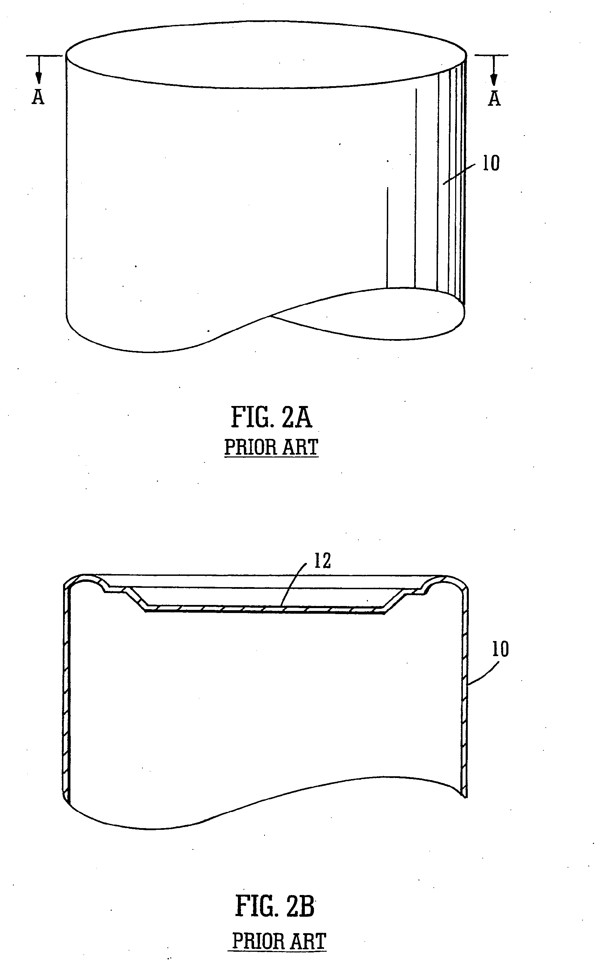

Figure 2a is a diagrammatic representation of the base of a standard container 10 typically used for the packaging of pharmaceuticals and Figure 2b shows the standard shape of the base 12 of the container 10 of Figure 2a.

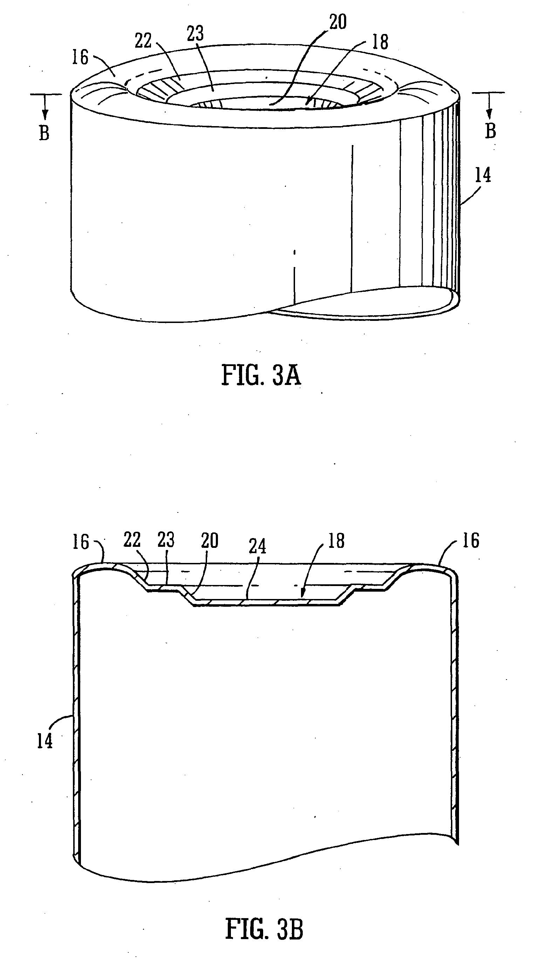

Figures 3a and 3b show a container 14 according to a preferred embodiment of the present invention. The base 16 of the container 14 has a recess 18 formed therein to receive an RFID tag (not shown). The recess 18 may be formed in the container 14 during initial production of the container 14, which may be produced, for example, by means of an injection blow moulding process.

Injection moulding is the process of forcing melted plastic into a mould cavity and, once the plastic has cooled, the moulded component may be ejected. An injection blow moulding process is preferred for the production of the container 14 as it enables the production of a finished product having superior visual and dimensional qualities than had the product been produced by an extrusion moulding process.

An injection moulding machine (not shown) for producing the container 14 may consist of three basic parts, namely, a mould, a clamping unit and an injection unit. The clamping unit holds the mould under pressure during injection and cooling and may be designed to hold the two halves of the mould together. The preferred injection blow moulding machine is based on an extruder barrel and screw assembly which melts the plastics material from which the container 14 is to be produced. During the injection phase, the plastics material is heated until it reaches the desired temperature. The molten material is then fed into a manifold and injected through nozzles into a hollow, heated pre-form mould. The pre-form mould forms the external shape of the container 14 to be produced and is clamped around a mandrel (the core rod) which forms the internal shape of the pre-form. For example, the pre-form may consist of a fully formed bottle neck with a thick tube of polymer (plastics material) attached which will form the body of the container 14.

The pre-form mould is then opened and the core rod is rotated and clamped into the hollowed, chilled blow mould. The core rod is then opened to allow compressed air into the pre-form to inflate it to the finished shape.

The recess 18 in the base 16 of the container 14 which is designed to receive an RFID tag is, according to a preferred embodiment of the present invention, made during the blowing element of the process of forming the container 14. The base punt, which is the tool used to form the shape of the base 16 of the container 14, allows the plastics material to flow and ensures the desired wall thickness and base stability. The shape of the recess 18 is preferably formed in the base 16 of the container 14 rather than being produced by the injection moulding process itself. Virtually any form may be blown into the base 16 to suit the RFID tag dimensions and the subsequent welding process to be used to secure the tag to the base of the container 14.

After a cooling period, the blow mould may be opened and the core rod rotated to the ejector position. The finished article is stripped off the core rod and leak tested prior to packing. The pre-form and blow mould may have many cavities, typically three to sixteen, depending on article size and required output. There are preferably three sets of core rods that allow concurrent pre-form injection, blow moulding and ejection.

The container 14 described and illustrated for exemplary purposes is moulded to include the recess 18, which is not normally present in a conventional pharmaceutical bottle and which may have substantially the same "female" dimensions as the tag to be attached, and preferably retains the design necessary to enable the container to stand independently.

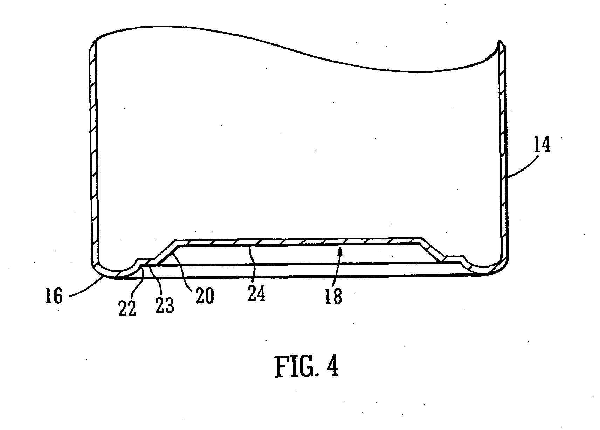

In a preferred embodiment, as shown in Figures 3b and 4, the recess 18 in the base 16 of the container 14 has a first section 20 and a second section 22. The first and second sections 20 and 22 are preferably co-axial and frustro-conical. The first and second sections 20 and 22 taper outwardly from the base portion 24 of the container 14 which defines the base of the recess 18, with a flange portion 23 linking the first and second sections. Preferably, the base 24 of the recess 18 has a diameter of around 30 mm and the combined depth of the first and second sections 20 and 22 of the recess 18 is around 3mm. Preferably, the diameter of the second section 22 at the peripheral free edge (as opposed to the edge attached to the flange portion 23 linking the first and second sections 20 and 22) is around 44mm.

The term plastics material may be considered to include thermoplastic and thermoset materials. Thermoplastic materials are normally categorized as amorphous crystalline materials. These crystalline materials generally have an ordered pattern and a well-defined melting temperature and include plastics such as polyethylene. In a preferred embodiment, the container 14 which may be used, for example, in the packaging of pharmaceuticals, may be manufactured from a medium or high density polyethylene and the RFID tag to be attached may also be encapsulated in a medium or high density polyethylene housing to suit the tag moulding process and therefore have good joining properties to the container 14.

Preferably, the grade of polyethylene used in the manufacture of the container 14 is one which is registered with the FDA or appropriate authority in the relevant country for contact with various manufactured drugs and it is therefore advantageous for the RFID tag to be encapsulated in a similar material and located on the external surface of the container 14 to avoid new stability testing and retention of the authority's accreditation.

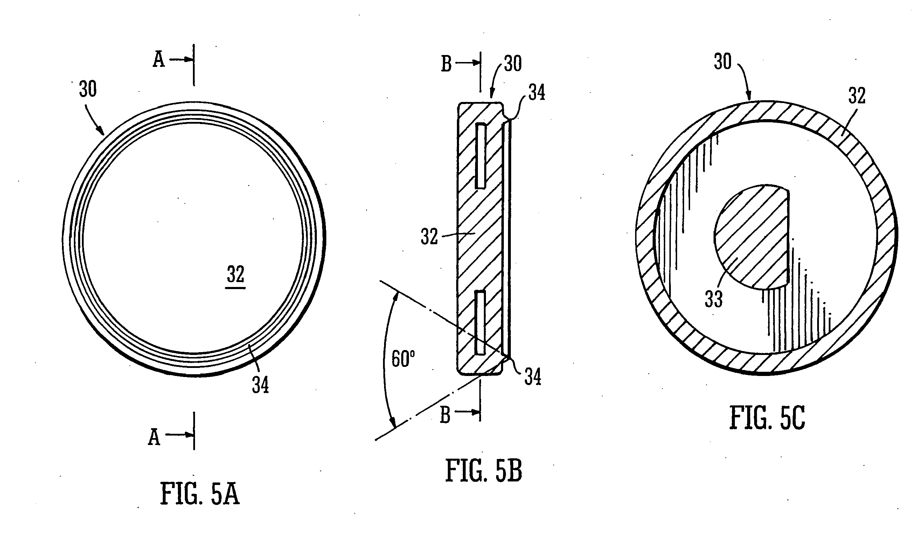

Figures 5a, 5b and 5c show an RFID tag 30 for attachment to a container 14 according to a preferred embodiment of the present invention. The tag 30 preferably comprises a substantially disc-shaped housing 32 into which the microchip 33 containing the operational electronics of the tag is encased. A protrusion 34 extends from one face of the housing 32 and preferably extends therefrom as a continuous ring of a lesser diameter than the housing 32. In a preferred embodiment, the cross-sectional shape of the protrusion 34 is substantially an equilateral triangle.

The encapsulation of the tag 30 is preferably a two stage injection process to provide the necessary robustness and read performance required of the tag. The first injection process is to encapsulate the placement and fixing of the electronics and the second injection process is a further process to ensure the temperature change and robustness requirements. In a preferred embodiment, the protrusion 34 is formed during the second injection process. Thus, after the tag 30 has been encapsulated, in the second injection process the substantially annular protrusion 34 may be included and chosen to maximise the subsequent weld between the tag 30 and the container 14.

The preferred dimensions of the housing 32 for the tag 30 are for the housing to have a diameter of around 17 mm and a thickness of around 3mm. The protrusion 34 preferably has a diameter of around 15mm and preferably extends to a height of around 0.4mm from a face of the housing 32. The dimensions may be varied from these but the aforementioned dimensions align with the smallest commonly used pharmaceutical bottle and may be used for all sizes upwards. These dimensions also result in a tag 30 which satisfies the anticipated read/write distance of the normal production facility when placed beneath a conveyor in use or at a bottle filler or other process stations.

The antenna is preferably also encased within the housing 32 and is preferably a copper etched antenna on an epoxy substrate. The connection between the antenna and the microchip is preferably by means of wire bonding and with an epoxy globtop acting as protection of the connection. The antenna design preferably incorporates a double sided antenna, that is, the antenna extends both sides of the substrate, to ensure a good ratio of performance for its size, and a high read performance whilst maintaining a small diameter. The electronics may be incorporated into a microchip and the microchip and antenna are preferably chosen to have a high resistance to heat to enable them to be used in harsh temperature conditions and to enable welding of the tag 30 to the container 14 to occur without damaging the electronics and/or the antenna.

In various preferred embodiments, it may be advantageous to use a variety of colours for the housing 32 of the RFID tag 30, depending on the use of the tagged product, or to denote the contents or other characteristics of the tagged container 14 or contents thereof. In a preferred embodiment in which the container 14 is to be used for the packaging of pharmaceuticals, the housing may be coloured, for example, according to the Pantone reference 3285c.

According to one or more preferred embodiments of the present invention, the RFID tag 30 may be attached to the container 14 by means of an ultrasonic welding process. Ultrasonic welding involves the use of high frequency sound energy to soften or melt the thermoplastic material of the housing and container 14 at the join between the tag 30 and the wall of the container 14 defining the recess 18 therein. The encapsulated tag 30 is located in the recess 18 in the base of the container 14 with the face of the tag 30 from which the protrusion 34 extends being placed in the recess 18 so that the protrusion 34 extends into the recess 18 towards the base 24 thereof. The tag 30 and the container 14 are held together under pressure and are subjected to ultrasonic vibrations usually at a frequency of 20, 30 or 40 KHz.

The ability to weld a component successfully is governed by the design of the equipment, the mechanical properties of the material to be welded and the design of the components. In order to guarantee the successful welding of any parts, careful design of components and fixtures is required. Ultrasonic welding is very fast (weld times are typically less than one second) and easily automated.

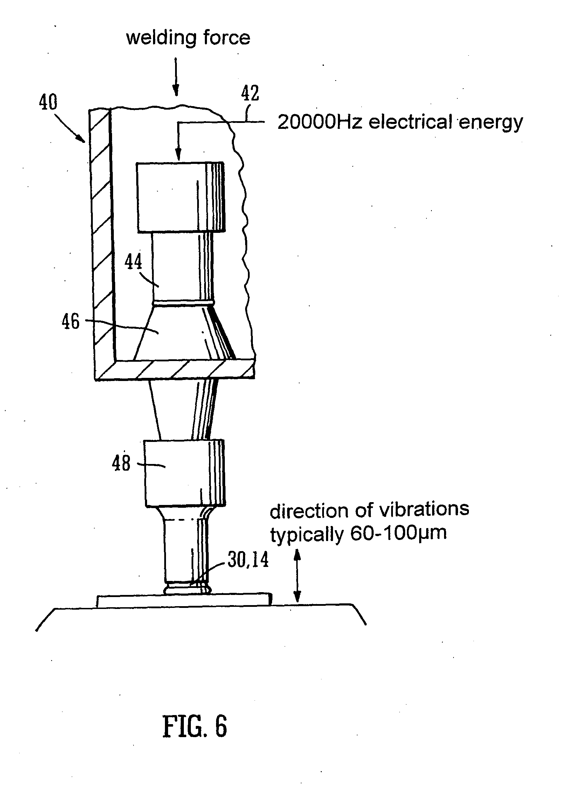

An ultrasonic welding machine 40 for use in attaching the tag 30 to the container 14 according to a preferred embodiment is shown in Figure 6. The machine 40 comprises four main components, namely, a power supply 42, a converter 44, an amplitude modifying device (termed a booster) 46 and an acoustic tool 48 known as the horn or sonotrode. The power supply 42 produces electrical energy at a frequency of around 20, 30 or 40 KHz. This energy is applied to the converter 44 in which disks (not shown) of piezoelectric material are sandwiched between two metal sections. These disks are clamped tightly together and are always held in compression. The converter 44 changes electrical energy into mechanical vibratory energy at ultrasonic frequencies. Most ultrasonic welding machines operate at 20 KHz. This is above the highest frequency generally detected by the human ear. The vibratory energy is then transmitted through the booster 46.

The booster 46 increases the amplitude of the sound wave. The sound waves are then transmitted to the horn 48. The horn 48 is an acoustic tool that transfers the vibratory energy directly to the tag 30 and the container 14 being assembled, and it also applies a welding pressure. The vibrations are then transmitted through the workpiece to the joint area between the tag 30 and the container 14 and the vibratory energy is converted to heat through friction. This then softens or melts the thermoplastic and joins the contacting parts of the tag 30 and container 14 together. The protrusion 34 extending from the surface of the tag 30 also melts during the ultrasonic welding process to effect an improved weld of the tag 30 to the container 14.

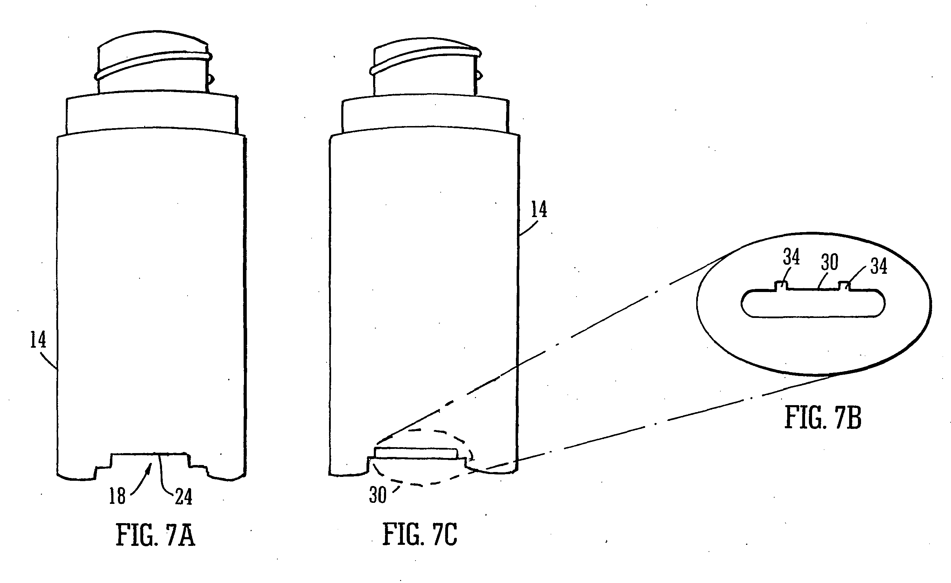

Figures 7a to 7c show the locating of the tag 30 in the container 14 before and after ultrasonic welding to secure the tag 30 in position, Figure 7c showing the finished product. An accurate and secure fit of the tag 30 in the container base recess 18 further adds to the anti-counterfeit quality of the container and tag as a further weld may be effected between the outer circumferential surface of the tag housing 32 and the inner circumferential surface of the walls of the container 14 defining the recess 18 during the ultrasonic welding process. This is more advantageous than using adhesives to affix the tag 30 to the container 14 as adhesives do not produce a homogenous join between the two parts, in contrast to ultrasonic welding. Thus, a container 14 may be produced with a flush-fitting tag 30 in the base 16 which retains its functionality as a container as originally conceived as the tag 30 is locating the tag on the outside of the container, and thereby enables the tag to be considered secondary packaging. This is particularly advantageous as it means that the container 14 incorporating the tag 30 may not require further stability testing which would otherwise be required in certain industries such as the pharmaceutical, beauty, food or beverage markets; However, whilst it is advantageous to include the tag 30 in the base 16 of the container 14, the tag 30 could be ultrasonically welded to the container 14 in a position other than the base 16. The container 14 may be used, if required, without the need to use its RFID capability.

Tooled parts are required in the welding machine 40 to be used with components of different sizes although the parts can be used continually for a high volume output.

The benefits of the ultrasonic welding process include energy efficiency, higher productivity with low-cost, ease of automated assembly line production and fast joining timings. There are limitations to the process, usually related to the maximum component length that can be welded, but this does not generally apply to the radio frequency enabled containers 14 embodying the present invention.

The process of generating melt at the meeting surfaces of two thermoplastic parts may be defined as the welding process. When ultrasonic vibrations stop, the molten material solidifies and a weld is achieved. The resultant joint strength approaches that of the parent material. The RFID tag 30 and container 14 may therefore be joined by ultrasonic welding to become effectively integral (unitary) and to produce a radio frequency enabled container. It is not generally possible to remove the tag 30 without the destruction of the container 14. Thus the tag 30 may be considered to be an integral part of the manufactured container 14 and serves to inhibit fraud as the tag 30 cannot generally be duplicated or replaced without destruction of the container 14.

Ultrasonic welding allows fast and clean assembly without the use of consumables. Furthermore, in a number of industries, the aesthetic appearance of the assembled product may be very important and ultrasonic welding also enables an aesthetically appealing product to be created. Additionally, there is no contamination in the process and the welding may be carried out in a clean room environment and this may be as important as the weld itself in some situations.

Amorphous materials exhibit a random, spaghetti-like structure and are good at transmitting the ultrasonic energy to the part that needs to be bonded. Most thermoset materials cannot be ultrasonically bonded as they burn when heated. However, high density polyethelene has been found to be particularly suitable for use in forming the container 14 and the housing 32 encapsulating the tag 30, and such a container is particularly useful, for example, in the packaging of pharmaceuticals.

Furthermore, hermetic seals between the tag 30 and the container 14 are possible if the tag is attached to the container using an ultrasonic welding technique and may be achieved without disturbance of the electronic heart of the chip when appropriate controls are applied in the welding process together with appropriate heat and joint design, including the protrusion 34 extending from the tag 30 and desirable dimensions of the recessed bottle base. The choice of these parameters is important as it is otherwise easy to effect a weld which destroys the microchip within the tag 30.

The preferred parameters used for ultrasonically welding an RFID tag 30 to the container 14 may be, for example:

| | |
|---|---|
| Weld Time | 0.223 milliseconds |
| Energy | 30 watts per second |
| Weld pressure | 2 bar |
| Down pressure | 0.3 bar |
| Amplitude | 100% |
| Hold time | 800 milliseconds |

The equipment used in the ultrasonic welding process may be microprocessor controlled and tests confirm the above parameters may be used to effect the weld without destroying the electronics of the RFID tag 30.

The ultrasonic welding process could easily be an in-line process with the injection blow moulding as the containers are ejected onto a conveyor for cooling. Alternatively, the ultrasonic welding may be carried out separately and/or even manually to ensure that tags read pre and post welding.

The protrusion 34 which has been described and shown as extending from the tag 30 acts as an energy director and it melts during the ultrasonic welding process to increase the strength of the weld between the tag 30 and the container 14. The preferred place for this protrusion 34 is extending from an outer surface of the housing 32 of the tag 30, however, such a protrusion 34 could alternatively or additionally extend from the container 14 into the recess 18.

In a preferred embodiment, the electronics in the tag 30 may be chosen to operate at a frequency of around 13.56 MHz. However, low or ultra high frequency tags could be similarly packaged and used in preferred embodiments of the present invention. Furthermore, RFID tags suitable for use in one or more preferred embodiments are not limited in frequency to those above, as tags of all frequencies may be similarly used.

With regard to Low Frequency (LF) tags, there are two commonly used frequencies in this band, 125KHz and 134KHz (and the associated ISO standard is ISO standard 11785). LF tags tend to require a copper wire coil antenna which is robustly packaged along with the tag chip in a suitable housing. These tags operate well in most environments and can be successfully used when mounted on metal surfaces although read range is reduced. Read ranges up to two metres may be achieved using LF tags but the ability to read multiple tags simultaneously may limited. By contrast, High Frequency tags operate at 13.56MHz but also often have a copper wire coil antenna although they may also be used with flexible inlays (e.g. in "smart" labels) and with printed conductive ink antennae. Antennae may also be formed on silicon wafers as part of the RFID chip itself. There is an ISO standard for HF tags (ISO 15963) which is supported by most manufacturers and allows multi-sourcing of compatible tags. HF tags operate well in most environments although they are much more limited than LF tags if mounted on metal surfaces. Read ranges are comparable with those of LF tags but HF technology has a well-established capability for the reading of multiple tags, for example more than 250 tags.

UHF tag technology is the most recently developed and has been the subject of much speculation and promotion particularly with regard to its potential application in the retail supply chain. The positive aspects of UHF technology are its suitability for printed ink antennae, its ability to read hundreds or thousands of tags simultaneously and its long read range in free air. However there are severe limitations that affect its ability to be deployed in many applications. The UHF signal is heavily attenuated by liquids and a read range of several metres in ideal conditions can be reduced to almost zero if the tag is adjacent to liquids. The presence of metals has a similar effect. The typical operating frequencies for UHF tags are between 869 to 915 MHz. Thus, higher frequency tags can transfer data faster and can have a longer range than lower frequency tags. However, LF tags may experience less environmental interference and may be omni-directionally readable.

Tags 30 for use in one or more preferred embodiments may be selected from a wide range of designs and price points and, as such, may be suited to a whole host of applications. The tags 30 may be active (with battery) or passive (where the power comes from the interrogating/reading transmitter) types. Furthermore, the tags 30 for use inpreferred embodiments may be Read Only Tags which are programmed with an ID number which is typically 64 to 128 bits in length thereby providing for a large number of differently identified tags, or Read/Write Tags. Read/Write tags may include both a fixed ID number similar to that of a read/only tag along with a write-able user data area of 128 to 2048 bits although this data area provision is tending to increase as technology develops. Some HF tags are already available with 8192 bits. This data area can be used in any way required by the user, for example 8192 bit memory could be used to hold, for example, 1024 alphanumeric characters. However, more efficient use of the space may be made if the user implements an appropriate scheme of data coding which is relevant to the business application.

In use, a quality assessment/quality control (QA/QC) reader (not shown) may be easily situated on a conveyor on which the containers 14 are carried to provide continuous flow and enable the preparation of a manifest of containers and their associated unique identification codes as they are packed into the shipper or outer carton.

In summary, the containers 14 incorporating the RFID tags 30 in accordance with one or more preferred embodiments of the present invention have a number of advantages including the following:
- a primary pack may be produced, that is, a container which is in direct contact with the drug and the RFID may be enabled at the manufacturing source;
- the containers may be used with or without RFID, as desired, as the RFID tag does not interfere with the function or stability of the containers;
- if the same material as is used for the construction of the container is also used for the construction of the housing of the RFID tag, the process of forming the containers incorporating the tags may not necessarily require further stability data on the materials to be used to be obtained, particularly if formed of governmentally pre-approved material(s);
- RFID is suitable for a wide range of frequencies although use of a high frequency tag (13.56 MHz) conforming to ISO 15963 may preferably be used;
- the containers incorporating the RFID tags may be suitably robust to withstand, for example, high temperatures;
- the tag may be suitably located in the container for the most effective performance, particularly on packaging lines;
- the tags have good readability;
- the microchip and antenna may packaged in the tag in the most robust way and in the most suitable material for the intended purpose;
- the tags have multi read capability;
- there is tag anti-collision, that is, one tag will not touch another and the tags do not require orientation before reading on a production line, unlike the case where tags are incorporated into labels;
- locating the tag in the base of the container further serves to avoid misreads due to collision which could otherwise occur if two tags were to touch each other;
- the tags permit unique identification and may be identified in inventory, prior to packaging;
- the containers and tags may conform to one or more ISO standards;
- the containers incorporating the RFID tags and modifications to the containers required to incorporate the tags may be small in dimension enabling the methods to be applied to various sizes and shapes of container;
- the containers incorporating the RFID tags and the tags themselves (including the microchip and antenna) may be robust against adverse environmental conditions and the robustness may be enhanced by the material used to encase the tags;
- the containers incorporating the RFID tags are tamper evident as the tag cannot be removed without obvious tamper evidence;
- most containers may be tagged by a minimal variety of tags, in terms of, for example, size and frequency, and as the volume of required tagged containers increases, the commercial viability of tagging at a manufacturing source improves and physically identical tags may be used in the manufacture of different containers;
- locating the tag on the outside of the container, and thereby enabling the tag to be considered secondary packaging, is particularly advantageous as the container incorporating the tag may not require further stability testing which would otherwise be required in certain industries such as the pharmaceutical, beauty, food or beverage markets;
- the wall thickness of the container may be selected to conform with permeability requirements;
- the containers with the tags attached may be filled on any existing packaging line, at identical speeds to conventional bottles and may be fully integrated with current systems;
- the containers with the tags attached may be labelled with existing label stock at standard speed;
- the containers with the tags attached are highly cost-effective when compared to the processing and material costs associated with the application of conventional RFID labels;
- the tag may be welded to the base of the container for ease of read/write operations; and
- the microchips included in the tags may have read/write capability.

Thus, one or more preferred embodiments of the present invention enable the production of a container of any size that incorporates an uniquely coded RFID tag that can be read or written to at any time in its life from "cradle to grave", and has wide-spread usage and particular utility in the packaging of drugs in the pharmaceutical industry, especially in clinical trials where there is a need for "blindness" (the capability to read the RFID enabled container without line of sight or visible identification).

One or more preferred embodiments of the present invention also provide a container that can simplify the process of accurately identifying both it and its contents and which is commercially acceptable for current processes and packaging requirements and material stability. The use of RFID source tagging makes it possible to address the challenges presented in many industrial applications. Each tagged container may be uniquely coded at manufacture and may be identified and applied to inventory control systems at the very earliest stages of packaging of a product. The identity of each container may be determined and the identity of it and its contents stored, if required. As each container can be uniquely identified, and its contents and associated data determined at the time that the container is processed, for example filled. A database can be established which directly associates the contents of the container with, for instance, the label which may be applied to the container, or simply to the container ownership. The tagged container may also carry its own history in a form which is not human-readable but which may be accessed and/or updated using suitable equipment.

Furthermore, a suitable transceiver for reading from and writing to the container may be used which is also adapted to read conventional barcodes allowing various processes to be evaluated in RFID as well as retaining standard barcode readability where such a requirement is the current auto-id technology.

The ability to write to or read from a tag or associated database provides many advantages over existing technologies for the control and audit of the production and distribution of the container at all stages and makes it possible to readily recall details and status of the container and its contents. This may cover, inter alia, materials, assembly and storage, the ability to interrogate and update the database or tag as required for planning and scheduling, identify transfer from a warehouse or other location, and the filling and labelling and package assembly.

With the use of fixed and/or handheld readers the data can be read at any point in the lifecycle, at works, in transit, at delivery point or in the clinic by specified personnel, in particular quality assurance tag without the requirement to open the packaging. The unique tagged identification allied to a database enables specific instructions to be issued. For example, at the appropriate point in the process a label can be printed, verified and applied in the secure knowledge that it is correct; the correct contents of the pack can be verified, and again, dispatch labels can be printed by accessing the database and verifying the data stored. Thus, with the use of RFID "just-in-time" labelling is a real possibility.

Furthermore, RFID proves extremely flexible with respect to its integration with legacy systems and other technologies including, but not exclusively, auto-id and, as such, there is an opportunity to add RFID capability to existing practice and with immediate results.

Various modifications to the embodiments of the present invention described above may be made. For example, other components and method steps can be added or substituted for those above. Thus, although the invention has been described above using particular embodiments, many variations are possible within the scope of the claims, as will be clear to the skilled reader, without departing from the scope of the invention. In particular, whilst the above preferred embodiments have been described in the context of welding an RFID tag into recess in the base of a container, the recess could be located anywhere on container, as desired. Furthermore, whilst the present invention has been described and illustrated in terms of a container particularly for use in packaging pharmaceuticals the methodology could be applied to any appropriate container or component.

## Claims

1. A method of attaching an RFID tag (30) to a component (14), the RFID tag having a housing (32) encapsulating control electronics and an antenna, the method comprising the steps of:
locating the RFID tag on or in a section of a component;
**characterised by**:-
applying an ultrasonic welding process to melt a portion of the housing (32) wherein one or other of the housing of the RFID tag and the component comprises a protrusion (34) extending therefrom, a portion of the component contacting the housing and the protrusion to increase the strength of the weld after cooling; and
allowing the component and the RFID tag to cool to form a weld therebetween.

2. A method according to claim 1, wherein the step of locating the RFID tag comprises locating the RFID tag in a recess (18) in the component.

3. A method according to claim 2, wherein the protrusion extends from a surface of the housing of the RFID tag, the step of locating the RFID tag further comprising locating the RFID tag so that the protrusion extends into the recess.

4. A method according to any one of claims 2 or 3, wherein the protrusion comprises a continuous annular section extending from a face of the housing of the RFID tag.

5. A method according to any one of claims 2 to 4, wherein the protrusion has a substantially equilaterally triangular cross-section.

6. A method according to any one of claims 2 to 5, wherein the step of applying an ultrasonic welding process further comprises melting a portion of the component which defines a wall of the recess and/or a portion of a peripheral edge of the housing abutting a wall of the recess to increase the strength of the weld after cooling.

7. A method according to any one of the preceding claims, wherein the component is formed from any one of a plastics material, polyethylene, high density polyethylene, or medium density polyethylene.

8. A method according to any one of claims 2 to 7, wherein the step of locating the RFID tag in a recess in the component comprises locating an RFID tag the housing of which is formed of the same material as the section of the component.

9. A method according to any one of the preceding claims, wherein the step of applying an ultrasonic welding process comprises applying one or more of a weld time of around 0.223 milliseconds, an energy of around 30 watts per second, a weld pressure of around 2 bar and a down pressure of around 0.3 bar.

10. A method according to any one of claims 2 to 9 when appended to claim 2, wherein the recess in the component has a first section (20) and a second section (22), the first and second sections being substantially co-axial and frustro-conical, tapering outwardly from the section of the component defining the base of the recess.

11. A method according to claim 10, wherein the base of the recess has a diameter of around 30 mm, the combined depth of the first and second sections of the recess is around 3mm, and the diameter of the second section at a peripheral free edge spaced from an edge attaching the first and second sections is around 44mm.

12. A method according to any one of the preceding claims wherein the component comprises a container for storing products.

## Patentansprüche

1. Verfahren zum Anbringen eines RFID-Etiketts (30) an einen Bauteil (14), wobei das RFID-Etikett ein Gehäuse (32) hat, das die Steuerelektronik und eine Antenne einkapselt, wobei das Verfahren die folgenden Schritte umfasst:
Platzieren des RFID-Etiketts auf oder in einen Abschnitt des Bauteils;
**gekennzeichnet durch**:
Anwenden eines Ultraschallschweißprozesses, um einen Teil des Gehäuses (32) zu schmelzen, wobei das Gehäuse des RFID-Etiketts oder der Bauteil einen Vorsprung (34) umfasst, der sich davon aus erstreckt, wobei ein Teil des Bauteils mit dem Gehäuse und dem Vorsprung in Kontakt steht, um die Stärke der Schweißnaht nach dem Abkühlen zu erhöhen; und
Zulassen, dass der Bauteil und das RFID-Etikett abkühlen, um eine Schweißnaht dazwischen zu bilden.

2. Verfahren nach Anspruch 1, wobei der Schritt des Platzierens des RFID-Etiketts das Platzieren des RFID-Etiketts in eine Aussparung (18) im Bauteil umfasst.

3. Verfahren nach Anspruch 2, wobei sich der Vorsprung von einer Oberfläche des Gehäuses des RFID-Etiketts aus erstreckt, wobei der Schritt des Platzierens des RFID-Etiketts ferner das Platzieren des RFID-Etiketts umfasst, so dass sich der Vorsprung in die Aussparung erstreckt.

4. Verfahren nach einem der Ansprüche 2 oder 3, wobei der Vorsprung einen durchgehenden ringförmigen Abschnitt umfasst, der sich von einer Fläche des Gehäuses des RFID-Etiketts aus erstreckt.

5. Verfahren nach einem der Ansprüche 2 oder 4, wobei der Vorsprung einen im Wesentlichen gleichseitig dreieckigen Querschnitt hat.

6. Verfahren nach einem der Ansprüche 2 bis 5, wobei der Schritt des Anwendens eines Ultraschallschweißprozesses ferner das Schweißen eines Teils des Bauteils, der eine Wand der Aussparung definiert und/oder eines Teils eines Umfangsrandes des Gehäuses, der an eine Wand der Aussparung angrenzt, umfasst, um die Stärke der Schweißnaht nach dem Abkühlen zu erhöhen.

7. Verfahren nach einem der vorangehenden Ansprüche, wobei der Bauteil aus einem von Kunststoffmaterial, Polyethylen, Polyethylen hoher Dichte, oder Polyethylen mittlerer Dichte gebildet ist.

8. Verfahren nach einem der Ansprüche 2 bis 7, wobei der Schritt des Platzierens des RFID-Etiketts in eine Aussparung im Bauteil das Platzieren eines RFID-Etiketts, dessen Gehäuse aus dem selben Material wie der Abschnitt des Bauteils gebildet ist, umfasst.

9. Verfahren nach einem der vorangehenden Ansprüche, wobei der Schritt des Anwendens eines Ultraschallschweißprozesses das Anwenden einer Schweißzeit von etwa 0,223 Millisekunden und/oder einer Energie von etwa 30 Watt pro Sekunde und/oder eines Schweißprozesses von etwa 2 Bar und/oder einem Druck nach unten von etwa 0,3 Bar umfasst.

10. Verfahren nach einem der Ansprüche 2 bis 9, falls abhängig von Anspruch 2, wobei die Aussparung im Bauteil einen ersten Abschnitt (20) und einen zweiten Abschnitt (22) hat, wobei der erste und zweite Abschnitt im Wesentlichen koaxial und kegelstumpfförmig sind und sich vom Abschnitt des Bauteils, der die Basis der Aussparung definiert, nach außen hin verjüngen.

11. Verfahren nach Anspruch 10, wobei die Basis der Aussparung einen Durchmesser von etwa 30 mm hat, wobei die kombinierte Tiefe des ersten und zweiten Abschnitts der Aussparung etwa 3 mm beträgt und der Durchmesser des zweiten Abschnitts an einem freien Umfangsrand, der von einem Rand, der den ersten und zweiten Abschnitt befestigt, beabstandet ist, etwa 44 mm beträgt.

12. Verfahren nach einem der vorangehenden Ansprüche, wobei der Bauteil einen Behälter umfasst, um Produkte aufzubewahren.

## Revendications

1. Procédé de fixation d'étiquette RFID (30) à un composant (14), l'étiquette RFID comprenant un boîtier (32) encapsulant le système électronique de contrôle et une antenne, le procédé comprenant les étapes de:
placer l'étiquette RFID sur ou dans une section d'un composant;
**caractérisé par**:
l'utilisation d'un procédé de soudage par ultrasons pour faire fondre une partie du boîtier (32), le boîtier de l'étiquette RFID ou le composant comprenant une saillie (34) s'étendant de celui-ci, une partie du composant contactant le boîtier et la saillie pour augmenter la force de la soudure après refroidissement; et
laisser le composant et l'étiquette RFID refroidir pour former une soudure entre eux.

2. Procédé selon la revendication 1, dans lequel l'étape de placement de l'étiquette RFID comprend le placement de l'étiquette RFID dans un renfoncement (18) du composant.

3. Procédé selon la revendication 2, dans lequel la saillie s'étend depuis une surface du boîtier de l'étiquette RFID, l'étape de placement de l'étiquette RFID comprenant en outre le placement de l'étiquette RFID de sorte que la saillie s'étende dans le renfoncement.

4. Procédé selon l'une quelconque des revendications 2 ou 3, dans lequel la saillie comprend une section annulaire continue s'étendant depuis une surface du boîtier de l'étiquette RFID.

5. Procédé selon l'une quelconque des revendications 2 à 4, dans lequel la section transversale de la saillie est un triangle substantiellement équilatéral.

6. Procédé selon l'une quelconque des revendications 2 à 5, dans lequel l'étape consistant en l'utilisation d'un procédé de soudage par ultrasons comprend en outre le soudage d'une partie du composant qui définit une paroi du renfoncement et/ou d'une partie d'un bord périphérique du boîtier contigu à une paroi du renfoncement pour augmenter la force de la soudure après refroidissement.

7. Procédé selon l'une quelconque des revendications précédentes, dans lequel le composant est formé à partir d'un matériau plastique, de polyéthylène, de polyéthylène haute densité, ou de polyéthylène de densité moyenne.

8. Procédé selon l'une quelconque des revendications 2 à 7, dans lequel l'étape de placement de l'étiquette RFID dans un renfoncement du composant comprend le placement d'une étiquette RFID dont le boîtier est formé du même matériau que la section du composant.

9. Procédé selon l'une quelconque des revendications précédentes, dans lequel l'étape consistant à appliquer un procédé de soudage par ultrasons comprend l'application d'un temps de soudure d'environ 0,223 millisecondes et/ou une énergie d'environ 30 watts par seconde et/ou une pression de soudage d'environ 2 bar et/ou une pression vers le bas d'environ 0,3 bar.

10. Procédé selon l'une quelconque des revendications 2 à 9, quand dépendantes de la revendication 2, dans lequel le renfoncement du composant a une première section (20) et une deuxième section (22), les première et deuxième sections étant substantiellement coaxiales et tronconiques, s'effilant vers l'extérieur à partir de la section du composant définissant la base du renfoncement.

11. Procédé selon la revendication 10, dans lequel la base du renfoncement a un diamètre d'environ 30 mm, la profondeur combinée des première et deuxième sections du renfoncement est d'environ 3 mm, et le diamètre de la deuxième section à un bord périphérique libre espacé d'un bord fixant les première et deuxième sections est d'environ 44 mm.

12. Procédé selon l'une quelconque des revendications précédentes, dans lequel le composant comprend un récipient pour y stocker des produits.
